# EUROPEAN PATENT SPECIFICATION

(11) **EP 2 557 962 B1**
(45) Date of publication and mention of the grant of the patent: **14.05.2014**
(21) Application number: 11721357.9
(22) Date of filing: 25.03.2011
(51) Int. Cl.: A47B 88/00, E05B 65/46

(54) **A DRAWER ELEMENT FOR SHELVING STRUCTURES, PARTICULARLY FOR FITTING INSIDE OUTFITTED COMMERCIAL VEHICLES**
SCHUBLADENELEMENT FÜR REGALSTRUKTUREN, INSBESONDERE ZUR EINPASSUNG IN AUSGESTATTETE NUTZFAHRZEUGE
ÉLÉMENT DE TIROIR POUR STRUCTURES D'ÉTAGÈRE, EN PARTICULIER POUR L'ADAPTATION À L'INTÉRIEUR DE VÉHICULES COMMERCIAUX ÉQUIPÉS D'ACCESSOIRES

(30) Priority: 14.04.2010 IT MO20100113
(43) Date of publication of application: 20.02.2013
(73) Proprietor: Gema S.r.l., 40121 Bologna (IT)
(72) Inventor: CACCIA, Massimo Maria, I-48123 Ravenna (IT)
(74) Representative: Ciapetti, Emilio
(86) International application number: PCT/IB2011/000638
(87) International publication number: WO 2011/128734

(56) References cited:
- EP-A1- 0 438 943
- WO-A1-2004/017796
- DE-U1- 9 104 837
- US-A1- 2005 218 760

## Description

### DESCRIPTION OF THE INVENTION

The present invention relates to shelving structures, in particular for inside fitting of outfitted commercial vehicles.

In particular, the present invention relates to a drawer element designed to be mounted in such a shelving structure.

In the following, for sake of simplicity, we will refer to these vehicles with the name "van", which will not constitute a constraint or limitation on the invention.

It is known that fitting of the van is an essential feature for professionals who perform traveling work activities, therefore requiring to set up a vehicle, usually a van or a car properly adapted, so that it can stand in for their usual work environment at the best.

In addition, or alternatively, a van equipped in this way should enable the transport of specific articles with reference to the activities of the professionals involved, such as spare parts, hardware, equipment and tools in common use, necessary to operate with ease, efficiency and speed.

A set of components, such as drawers, trays, containers, and other similar elements and attachments, can transform a commercially available van in an efficient mobile workshop with a well-stocked warehouse.

With the inside fittings of the vans, artisans and maintenance operators of various types such as electricians, plumbers, house painters, can transport a large amount of material in a safe and tidy manner, and organize their work efficiently and comfortably. These components are supported by suitable shelving fitted with a series of measures aimed at reducing noises and vibrations. In general, the basic elements rest on rubber mats and drawers and trays are equipped with partitions which prevent items from gathering loudly at a side. These measures also prevent mixing of their contents as well as a more rational division thereof.

In general, all the various components of the containing elements, trays and drawers, and the material being transported must be properly secured to ensure the resistance of the structure not only during normal movement due to the trip, but also in case of shocks suffered by the van due to the unevenness of the road or the ground on which it is moving.

In addition, these structures must withstand shocks caused by collisions with obstacles or other vehicles, whilst providing security for those who find themselves inside the van.

In this regard, there is a test known as the 50 km/h Crash Test, that these structures must pass according to the regulations, during which the van is subjected to a shock due to a collision occurred ideally at that speed.

The shelving for vans is therefore an important, if not the most important component of the structure with the drawer element, which we will discuss below, as it must support and maintain all other elements in their position in different travel conditions. Considering the torsional and longitudinal bending, which the structure of the van undergoes during its movement, adaptability that the shelving must present is also evident, both in terms of its flexibility and in terms of fastening to the various sections of the van. Fastening means have to allow some flexibility for the shelving, however preventing the separation from the inner surfaces.

Everything should not eventually conflict with the need to reduce the weight of the structure, with the benefit of a greater load capability and in any case remaining within the limits required by the law. It is therefore clear that even a small weight saving becomes valuable in this context. Considering the large number of components used to set up the structure, it is clear that even a few grams for each of them lead to significant reductions in overall weight.

Finally, an important parameter that characterizes fitting of commercial vehicles is the time required for assembling shelving and components, in particular drawer elements, which means the non-use of vehicles and which therefore has an obvious negative influence from economic point of view for the business professional.

In practice, modular systems are now used almost universally, which are built according to different methods and principles, and generally include various items such as trays, drawers, etc. In the case of this description, we will refer in particular to drawer elements, often arranged in vertical series, one on top of another.

These modular structures are produced using different combinations of height and length and width, so that the shape of the shelving can be adapted to the different shapes and sizes of vans.

In particular, it is necessary to adjust the width of the structure, from bottom to top, in accordance with the shape of the curved wall of the van, usually with decreasing width. In many cases the structure must be adapted in accordance to projections protruding from the inner walls of the van, such as stiffening longitudinal ribs or vertical bars, attachment points and fastenings for parts of the van, and not least the internal wheel shrouds. These latter are often hidden by wheel shroud covers which, when mounted above the wheel shrouds, form the basis for the assembly of other element thereabove, but in this way they lead to the loss of significant room which cannot be used, or are used in a non-ordered or not rational way.

The most commonly adopted solutions include elements made of profiled steel sheets, firstly cut to size and then press-molded by cold pressing, welded or bolted together to form trays, drawers, etc.

According to a first known solution, the elements have sides which are higher than the actual height of the elements, so you can stack the elements by fastening the sides of the lower elements to the sides of the upper elements and then to the wall of the van. According to another solution, the elements already formed are joined with the sides to support posts, in turn fastened to the walls of the van.

The posts, in this latter case, the same as the sides in the previous one, have the dual function of supporting the elements and providing the necessary rigidity to them, giving strength to the structure as a whole.

The known solutions, however, present a number of drawbacks and disadvantages, as described here below.

The main disadvantages result from the material used, steel metal sheet, whose use is imposed by the element and support construction technique, as well as by the techniques themselves.

One of them concerns the excessive weight of the structure due to the materials used, in particular steel sheet for the walls and bottom of the elements, in addition to the steel sections used for the support posts. Also the processing techniques result in weight increase, for instance, the edges of the element walls are press-molded in box-like shape for greater stiffness.

It is clear that, in the particular case of elements in the form of sliding drawers, the number of pieces that compose them, considering also the support guides for their sliding and the outer casing within which the drawers slide, is large and the weight of the materials contributes remarkably to the final result of a high weight.

The use of steel sheet also includes the need for additional protection processing, such as painting and other operations of surface protection, further increasing the weight of the structure, and affecting primarily the production costs, already high for the different processing stages.

Basically, the elements must be cut to size, press-molded, surface-treated, often with complex and lengthy procedures in consideration of their shapes, for example by dip painting, assembled and then joined to the posts to form the overall structure.

Besides the long delays caused by drying of the paint, painting also causes pollution, disposal and material recovery problems when the structure is dismantled.

Another drawback, also due to materials and technologies used, regards the lack of versatility of the modular configuration. The rigidly determined shapes require different sets and combinations of different measures, also taking into account the necessary adaptability to the shape of the inner wall structure of the vans. So, big warehouses are necessary to contain a number of different elements sufficient to meet the various configuration needs.

This leads to a substantial increase in cost of inventory management and thus of the preparation of vans, as well as of the time to set up the fitting. In addition, the lack of adaptability of the elements, which is also affected by the need to have as much as possible a minimum number of components, leads to limited use of the space in the van.

Even the assembly of the elements have a negative impact on costs, upon consideration of the time required for these operations, usually handmade with a large number of complex actions, often involving the provision and the screwing of screws and nuts.

Just think of the high number of components of a drawer to understand how the assembly technique and methods used will affect the time for fitting.

Therefore, the time required for fitting the vans becomes long, both for the need for structural adjustment complex operations, and for the frequent lacking of components, in addition to the complexity of the implementation of the assembly.

The transport of the elements made according to the known art is also suffering from drawbacks and disadvantages, since the elements are supplied already mounted, and are bulky to transport, and also heavy, with remarkable effect on costs and delivery times.

WO 2004/017796 A1 discloses a drawer element, particularly for vehicle inside fitting shelving structures, said structures including containing elements and/or drawer elements joined to support elements, including a plurality of channel elements each one crossed on one side by one or more longitudinal inner grooves, and by at least one longitudinal edge groove; a plurality of metal sheet press-molded elements, fastening means designed to fasten said metal sheet press-molded elements to said channel elements, with these latter arranged perpendicularly to the above mentioned channel elements, in abutment against opposite ends thereof, said fastening means being designed to engage with the end sections of the above mentioned longitudinal inner grooves of said channel elements; at least one drawer element bottom element and connection means for slidingly connecting of said drawer element to related support elements.

Then the need exists to define a drawer element for a structure of that type, which can be produced and assembled easily and quickly and free of the drawbacks and disadvantages listed above, or which present them significantly mitigated.

The object of the present invention is to propose a drawer element for the manufacture and assembly of shelving structures, in particular, but not exclusively, for inside fitting of outfitted commercial vehicles, such that the elements of the structures result to be light, simple and quick to assemble and join when making up the structure, easily adaptable to different shapes of the interior walls of vans from different manufacturers and different models.

A further object of the present invention is to propose a drawer element as mentioned above, for which a smaller number of components and elements are sufficient.

Yet a further object of the present invention is to propose a drawer element as mentioned above, whose components are made of lightweight materials and quick processes, which do not require additional processing steps, such as for surface protection, and are environmentally acceptable and/or advantageous.

Another object of the present invention is to obtain a substantial economic advantage from the achievement of the aforesaid objects, with positive impact on production and installation costs of the fitting structured of the vans, in addition to a substantial reduction in setup times, obtained due to shorter operation time and the ability to always have all the components available, because of less storage space needed. Details of one or more implementations are set forth in the accompanying drawings and in the description hereinbelow. Other features and objects will become evident from the description and the drawings in which:
Figure 1 shows a sectional view of an extruded profiled aluminum component which constitutes the basic element of the drawer in question;
Figure 2 shows an exploded perspective view of components of a drawer element subject of the present invention;
Figures 3, 4 and e schematically show three assembly steps of a drawer element;
Figure 6 shows some additional features of the drawer element;
Figures 7 and 8 show schematically by way of example some details of the drawer element in question;
Figure 9 shows a complex consisting of several elements associated with corresponding support elements, to form part of the structure;
Figures 10 and 11 show schematically by way of example other details of the drawer element in question.

With reference to these Figures, the drawer element subject of the present invention is intended, in particular, for structures for inside fitting of commercial vehicles such as vans or van-like cars.

It is understood, however, that the technical solutions subject of the present invention can also be applied in other fields and other facilities of different configuration, without going beyond the scope of protection afforded by this invention.

The fitting structures in which the present technical solution is embodied, include containing elements in the form of trays and/or drawers, both fastened to supporting elements 30, 31. Other elements may be associated to the support elements, but these are not taken into account because they are not relevant in respect of the invention.

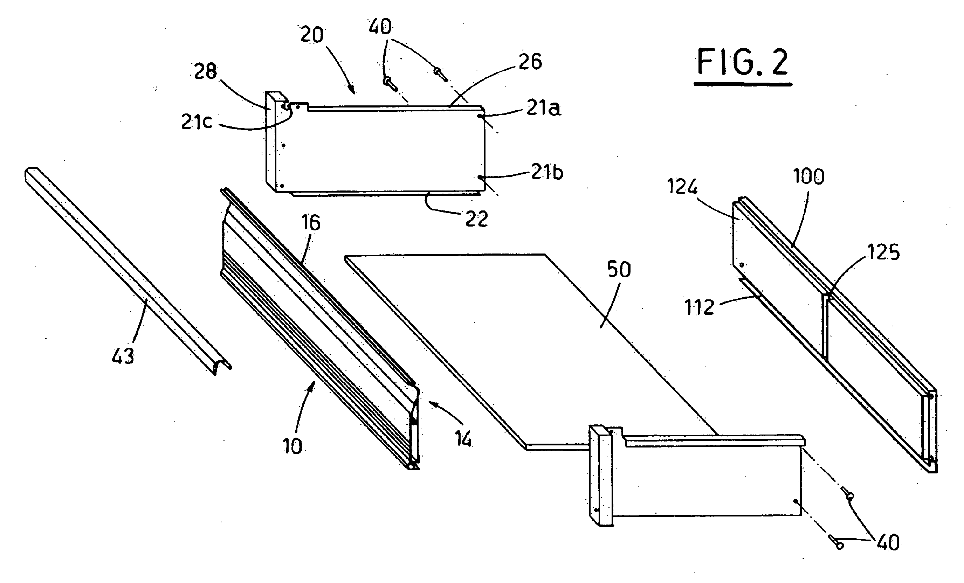

Similarly, the tray elements are no longer mentioned in the following, as they are not relevant to the specific invention of this application; on the other hand, they are the subject of a corresponding patent application filed on the same date by the applicant. Generally, the drawer element 1 consists of two channel elements 10, 100, two metal sheet press-molded elements 20, and at least one bottom element 50, as it can be seen in Figures 2 to 6.

The drawer elements 1 are then associated with support elements 30, 31, which consist of posts, for instance made from aluminum, preferably in the form of frames, with fastening holes made along their vertical sides.

Each of the aluminum channel elements 10, 100 features on its side one or more, for example two, internal longitudinal grooves 11a, 11b and at least one longitudinal edge groove 12, 112. This is produced by extrusion and cut to size.

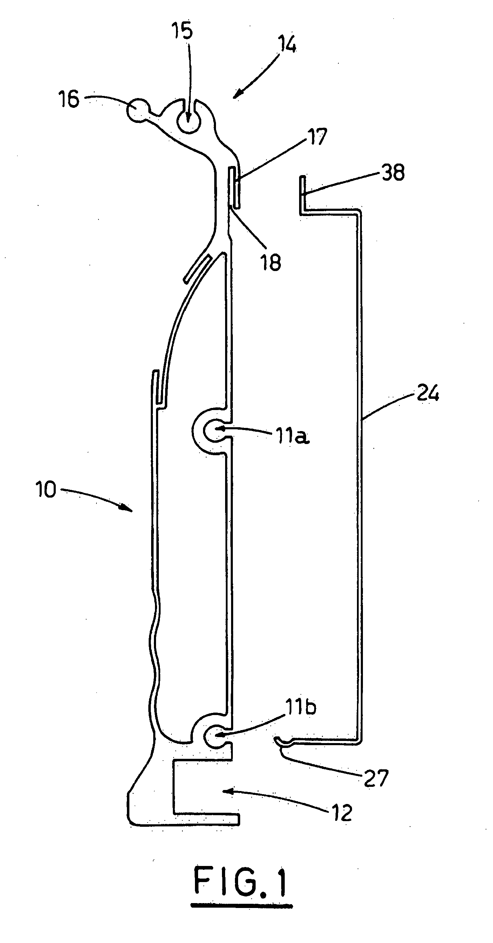

One 10 of the two channel elements 10, 100 is intended to form the front side in the drawer element, and features a contoured longitudinal edge 14, the upper one, which is evident in Figure 1 and will be described in greater detail later on, and conjunction its function as well.

Each of the two aluminum sheet press-molded elements 20 is provided with at least one longitudinal folded support edge 22 and a longitudinal support flap 26, folded to the opposite side of the longitudinal folded support edge 22. Furthermore, it also features holes 21a, 21b arranged in transverse rows and at distances corresponding to the distances between the internal longitudinal grooves 11a, 11b of the channel elements 10, 100.

Although both the press-molded elements 20 are shown, only one of them will be described, as the other one is inversely equal. Similarly, the numerical references have been assigned to only one of the press-molded elements, as every part of it have an exact correspondent in the other one, but with mirror-like shape.

The channel elements 10, 100 are joined to the press-molded elements 20 with the latter set cross-wise to the channel elements 10, 100, in abutment against their opposite ends, and with their longitudinal folded support edges 22 positioned to match with the longitudinal edge grooves 12, 112.

Joining between them is achieved by fastening means 40, capable of fastening the metal sheet press-molded elements 20 to the channel elements 10, they being screwed into the terminal sections of the longitudinal inner grooves 11a, 11b of the channel elements 10, 100.

In particular, the fastening means 40 include self-tapping screws, only some of which are illustrated in Figure 2, which thus allow assembling the drawer element quickly and easily.

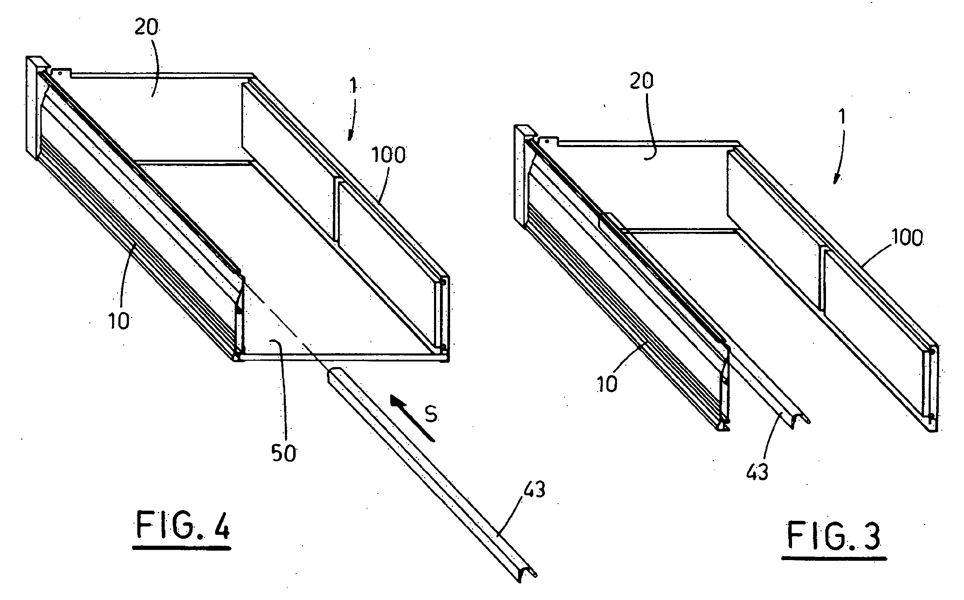

As it can be seen in Figure 3, after that a press-molded element 20 is joined to a front channel element 10 and to a rear channel element 100, a bottom element 50 is inserted within the edge grooves 12, 112 of the channel elements 10, 100 and resting on the longitudinal folded edges 22 of the press-molded element 20 joined thereto, by sliding it in direction S shown in Figure 3.

The bottom element is produced with a strong but lightweight material, such as a synthetic plastic material better known as "cannulated", which does not need any treatment and which is rapidly prepared by cutting it to size. The lightness of the bottom will reduce the overall weight of the drawer element and has also significant advantages with regard to its handling, shipping and storage.

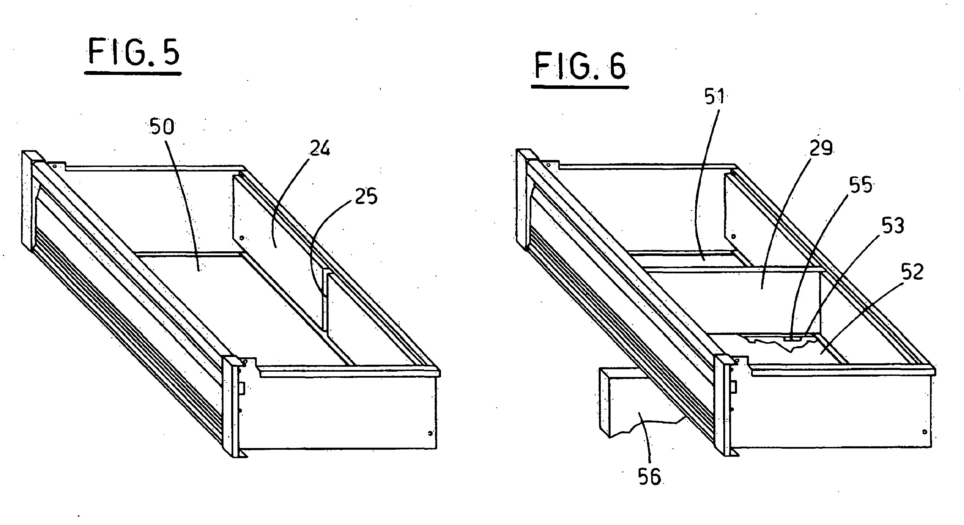

As shown in Figure 6, the bottom element 50 can be split into several portions 51, 52, separated from one another by a partition element 53 which has opposite ends of the same thickness as the bottom elements 51, 52 and inserted into longitudinal edge grooves 12, 112 of the front 10 and rear 100 channel elements.

This configuration of the bottom of the drawer element has several advantages. A first advantage is to give greater strength to the bottom, because the partition element is made of a material more rigid and resistant than the bottom. In practice, this is produced with an omega-shaped aluminum mold, so as to form two opposing folded edges which support the facing ends of the two portions 51, 52 resting thereon.

In particular, in the case of longer drawers, the interruption of continuity of the bottom element 50 allows the same to maintain its flat form, even when it contains articles of a certain weight.

A second advantage is to reduce the size of the bottom element, which can then be easily transported or shipped, stored and adapted in a modular form.

Another function of the partition element 53 is to allow mounting of a partition wall 56 beneath the drawer element, which partition wall consists of a simple plate, also of aluminum or plastic cannulated, or the side of a tray element or other element (not shown), both to be applied by means of fixing means 55 provided on the underside of the partition element 53 (Figure 6) or, more simply, by means of screws and nuts. Finally, as it can be seen in Figure 5, the second press-molded element 20 is applied to complete the drawer element 1.

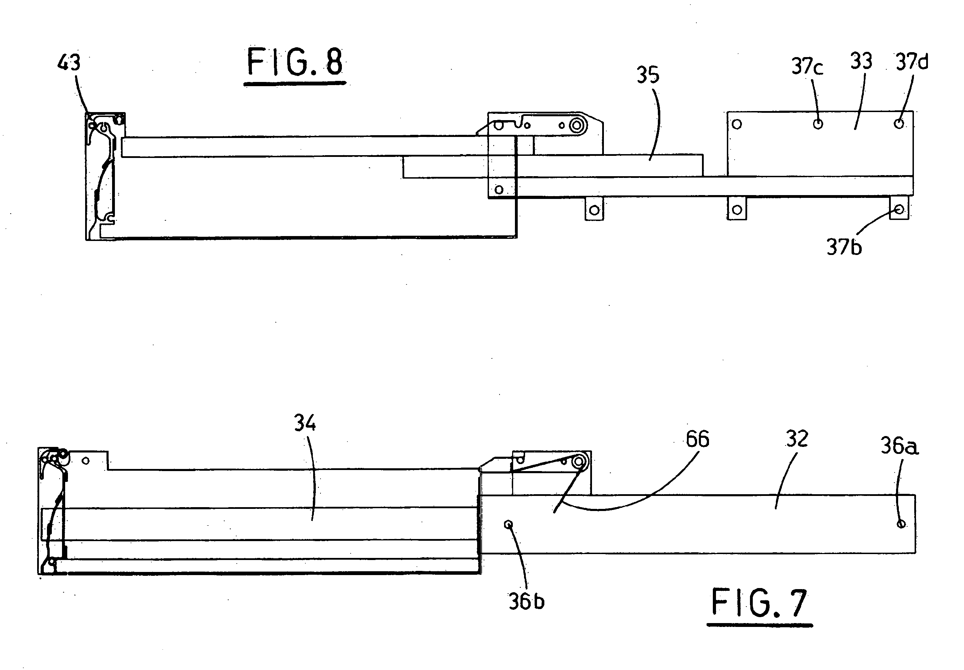

Beneath the longitudinal support flaps 26 of the metal sheet press-molded elements 20, support and guide means 34, 35 are then applied, which are of known type and therefore not described in detail. In figures 7 and 8 there are shown two different types of guide and support means 34, 35, both applied to the drawer element 1.

Each of the support and guide means 34, 35 is joined to a plate 32, 33 featuring one or more holes 36a, 36b, 37a, 37b, 37c designed to be coupled with corresponding holes 38a, 38b, 38c made in the support elements 30, 31 by means of screws (not illustrated), as shown in Figures 7, 8 and 9.

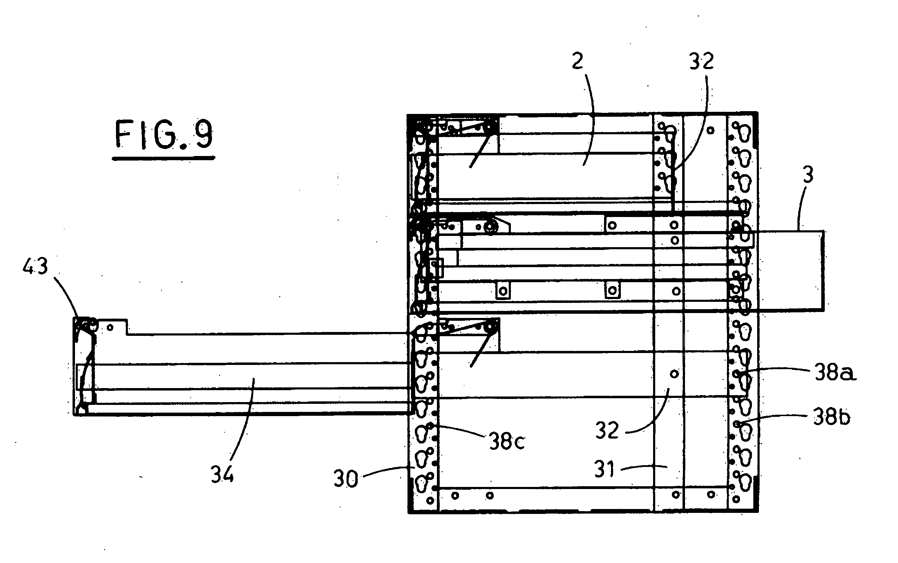

The support and guide means, along with the plates, form sliding connection means for joining the drawer element 1 with the support elements 30, 31 (Figure 9).

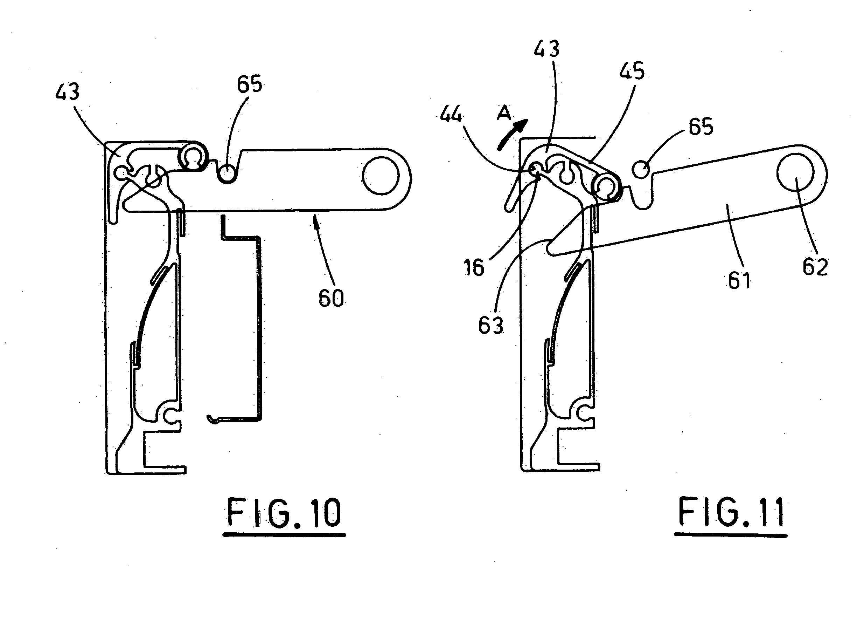

With reference to Figures 1, 10 e 11, it is stated that the contoured longitudinal edge 14 of the channel element 10 has the task of allowing support of a handle 43 with the possibility of oscillation thereof, also visible in Figure 3, for opening the drawer element.

The shaped edge 14 further includes a longitudinal inner groove 11c arranged side by side with an enlarged edge 16 having circular cross section, and designed to mate with more holes 21 c provided on the press-molded elements 20 by means of additional fastening means 40.

The handle 43 includes a body crossed longitudinally by a channel groove 44 designed to mate rotatably with the enlarged edge 16. The handle includes at least a tailpiece 45 provided at one end or preferably both ends. The or each tailpiece extends towards the back of a drawer element, inserting itself between the side thereof, consisting of a press-molded element 20, and a corresponding support element 30, 31.

The function of the tailpiece 45 is to press, as a result of the oscillation of the handle 43 in direction A, on locking means 60 of the drawer element 1 when in the closed position, to free this latter and allow opening thereof.

The locking means 60 of the drawer element in the closed position, visible in detail in Figures 10 and 11, each include at least one hook 61, rotatably supported with horizontal axle 62 and elastically retained in a horizontal position, for example by a spring 66 (Figure 7). The hook free end features a slope 63 followed by a recess 64 in direction of the horizontal axle 62.

A peg 65 for each hook is fitted to the outside of at least one of press-molded elements 20, preferably both, and is intended to slide, when closing the drawer element 1, until it enters the recess 64.

In this position, the closed drawer element is locked and does not open as a result of the movements of the vehicle. Opening of the drawer element is allowed by upward rotation of the handle 43, i.e. carrying the tailpiece 45 to push the hook 61 moving it downwards and releasing the peg 65 (Figure 11).

The press-molded elements 20 may be provided at the front with wings 28 folded laterally to cover the spaces remaining between the elements themselves and the close elements and/or the support elements, in which the support and guide means and the locking means are located.

Only a single locking element 60 was described in the drawer, but it will be understood that more locking means 60 may be provided, preferably one on each side of the drawer element.

By not limited way of example, the inside of the drawer element 1 can be optionally divided into sections separated by a partition wall 29, made e.g. with the same material used for the bottom 50, as shown in Figure 6.

To this end, "C"-shaped flat elements 24, 124, preferably of aluminum sheet, can be snap-fitted in a series within one or more of the internal longitudinal grooves 11a, 11b of the channel elements 10, 100, in order to form vertical grooves 25, 125 between them, in which one or the partition walls 29 can be introduced.

The application modes for the "C"-shaped flat elements 24, 124 may be different, particularly between the front channel element 10 and the rear channel element 100, as a result of the different shapes of the same.

Preferably, each "C"-shaped flat element 124 for the rear channel element 100 has an arc-shaped hemming 27 along each longitudinal side, designed to cause engagement of the same sides within the internal longitudinal grooves 11 a, 11b. Preferably, each "C"-shaped flat element 24 for the front channel element 10 has an arc-shaped hemming 27 along a longitudinal side, designed to cause engagement of the same side within one internal longitudinal grooves 11b, in particular the lower one (Figure 1), while on the other side it has a fold delimiting a border 38 designed to be introduced into a longitudinal seat 17 formed by a wing 18 present on the same side as the longitudinal inner grooves 11 a, 11 b.

The flat elements 24, 124 are then applied easily and quickly by causing a limited bend in the same flat elements and introducing the longitudinal sides in the corresponding grooves and seats. This measure results in a considerable reduction of time, and therefore costs, to prepare the drawer element.

In Figure 9 an assembly is shown consisting of several drawer elements 1 associated to support elements or frames 30, 31. The assemblies can obviously have different combinations of height and length.

The press-molded elements 20 may have more side by side series of holes 21 a, 21 b, 21 c which allow different widths for the drawer element 1 by changing the position of the rear channel element 100 with respect thereto. The rear attachment to the support elements can be made in a position different than that of the vertical side of the rear support element 30, for example, in a way that the drawer element 3 (Figure 9) protrudes from the back, entering into a niche in the van wall or in the curvature of the same.

Or otherwise, support elements 31 of shorter width can be used for drawer elements, possibly having themselves a shorter width.

This allows taking advantage of positions within the vehicle which would not normally accommodate storage elements. Thus, the possibility to mount drawer elements of different cross-sectional dimensions, narrower 2 or wider 3 (Figure 9) than the other, allows adaption of the structure to the vehicle inner wall shape, often curved.

Every space inside the vehicle is therefore rationally exploited, resulting in greater utility of the structure, with advantages in economic terms.

To further improve the adaptability of the structure in general, including the drawer elements in question, the front and rear channel elements, normally supplied already cut to size, can be given in bars. The installer will then cut to size the channel elements, according to the size of the storage compartment of the vehicle.

The advantages of the technical solution subject of the present invention will be apparent.

Through the use of lightweight and sturdy materials like aluminum and plastic cannulated, and the use of sophisticated production techniques, strong shelving with minimum weight are obtained for the vans. This allows greater load possibilities for the vehicle.

In addition, the aluminum sheet can be processed by unified processes, which allow in a single operation to cut and press-molding the elements getting the finished product. A substantial reduction in time which determines consistent cost savings.

The drawer element, as well as other elements associated therewith, is completely modular and the overall structure can be easily assembled in accordance with requirements and size of the load compartment of the vehicle dedicated to it. Every recess can be exploited. Every projection of the wall is no longer an obstacle preventing placement of storage elements at that point.

The adaptability and modularity thus obtained allow the structure to be mounted on any type and any brand of commercial vehicle. Also, kits already prepared can be made available which allow mounting of drawer elements, as well as all other elements and components of the structure, according to the preferred combination. Coverage for the inner wheel shrouds are no longer needed or they no longer disrupt the configuration of the structure, which easily adapts to the irregularities of the inner surface of the walls of a van, allowing rational exploitation of those areas too.

Another advantage of practical aspect is given by the drastic decrease of the component number required for the assemblage of the structure, and in particular of the drawer, thus allowing greater availability in store with use of smaller spaces.

This means on one side a cost savings and on the other side the possibility to provide the required fitting in very short time, ensuring quick and prompt assistance at the fitting centers.

In addition, the reduced size and weight that are obtained allow an easy and quick transportation of components, with a further reduction of costs and times for the provision of the structures. The retrieval of any missing part then can be prompt, without affecting or influencing the delivery time, or doing it in negligible way.

Another important advantage resulting from the adoption of the above mentioned materials and techniques, is the lack of finishing processes of the components, in particular painting. The lack of need to protect components from aluminum or plastic cannulated, means economic benefits (less material and shorter processing times), and ecological, many toxic materials such as paints or surface treatments, not being used. This advantage also occurs during disposal of components at the end of their period of use.

Finally, the robustness of the structure is guaranteed by the strength of materials, obtained thanks to the techniques which they allow to use. The obtained structure is resistant to a 50 km/h Crash Test without any problem.

The lighter weight of the structure and its strength also improve the tightness of the fastening means, reducing the hazard to passengers due to detachment of parts or the deformation of the material. At the same time, the structure has an elasticity that allows it to adapt to bending of the vehicle body, ensuring the tightness of the fastening means.

## Claims

1. A drawer element, particularly for vehicle inside fitting shelving structures, said structures including containing elements and/or drawer elements (1) joined to support elements (30, 31), **characterised by** including:
a plurality of channel elements (10, 100) each one crossed on one side by one or more longitudinal inner grooves (11 a, 11 b), and by at least one longitudinal edge groove (12, 112);
a plurality of metal sheet press-molded elements (20), each provided with at least one longitudinal folded support edge (22) and featuring holes (21 a, 21 b) arranged in crosswise rows and at distances corresponding to distances between said longitudinal inner grooves (11 a, 11 b) of said channel elements (10, 100);
fastening means (40) designed to fasten said metal sheet press-molded elements (20) to said channel elements (10), with these latter arranged perpendicularly to the above mentioned channel elements (10, 100), in abutment against opposite ends thereof, and with the related longitudinal folded support edges (22) positioned so as to match with said longitudinal edge grooves (12, 112), said fastening means being designed to engage with the end sections of the above mentioned longitudinal inner grooves (11 a, 11 b) of said channel elements (10, 100);
at least one drawer element bottom element (50), fitted into the edge grooves (12, 112) of the channel elements (10, 100) and resting onto the longitudinal folded support edges (22) of the press-molded elements (20);
connection means (32, 33) for sliding connecting of said drawer element (1) to related support elements (30, 31); flat "C"-shaped elements 24, 124 applicable by means of elastic deformation and in a series into one or more of said longitudinal inner grooves 11a, 11b of said channel elements 10, 100 so as to define vertical grooves 25, 125 between them for inserting therein one or more dividing elements 29.

2. A drawer element according to claim 1, wherein each connection means consists of:
support and guide means (34, 35), placed under a corresponding longitudinal support flap (26) of a corresponding metal sheet press-molded element (20), folded to the side opposite to the longitudinal folded support edge (22);
a plate (32, 33) to which said support and guide means (34, 35) are joined, with one or more holes (36a, 36b, 37a, 37b, 37c) drilled in said plate (32, 33) and designed to match corresponding holes (38a, 38b, 38c) made in said support elements (30, 31) for connection to said support elements (30, 31) by screw means.

3. A drawer element according to the previous claims, wherein the bottom element (50) is split in a plurality of portions (51, 52), divided from each other by a partition element (53) having opposite ends of the same thickness as the thickness of said bottom element (51, 52) and fitted inside said longitudinal edge grooves (12, 112).

4. A drawer element according to claim 3, wherein said partition element (53) features on its lower side either joining means (55) or holes for application therein of screw and nut means, provided for mounting a partition wall (56) to apply below the related partition element (53).

5. A drawer element according to claim 4, wherein each flat "C" shaped element (124) features an arc-shaped hemming (27) along each longitudinal edge, designed to cause engagement of the same edges inside at least one of the longitudinal inner grooves (11a, 11b) of said channel element (100).

6. A drawer element according to claim 4, wherein said flat "C"-shaped element (24) features an arc-shaped hemming (27) along a longitudinal edge, designed to cause engagement of the same edge inside one longitudinal inner groove (11 a, 11 b), and a fold along the other edge for defining a border (38) designed for insertion into a longitudinal seat (17) delimited by a wing (18) present on the same surface as the above mentioned longitudinal inner grooves (11a, 11b) of the channel element (10).

7. A drawer element according to any one of the previous claims, wherein a channel element (10) forming the front wall of said drawer element (1), has a longitudinal shaped edge (14) designed for oscillating support of a handle (43) for opening the same drawer element, said shaped edge (14) including a further longitudinal inner groove (11c) situated beside a circular section thickened edge (16), and designed for matching with further holes (21c) made in said press-molded elements (21) by further fastening means (40), whereas said handle (43) includes a body longitudinally crossed by a channel groove (44) designed to hingedly mate with said thickened edge (16), said handle having at least one tailpiece (45) designed to push locking means (60) of the drawer element (1) in closed condition, to unlock the drawer element and allow opening thereof when said handle is rotated A.

8. A drawer element according to claim 8, wherein said locking means (60) of the drawer element in closed condition include at least a pawl (61) rotatably supported about a horizontal axle (62) and resiliently held in horizontal position, with a free end featuring a slope (63) followed by, proceeding towards the horizontal axle (62), by a notch (64), and with at least a peg (65) fitted outside to at least one of said press-molded elements (20) and designed to slide, while closing said drawer element (1), until it enters said notch (64).

9. A drawer element according to any one of the previous claims, said press-molded element (20) consists of aluminium sheet and features a plurality of side by side series of holes (21 a, 21 b, 21 c) allowing different width of the drawer element (1) to be achieved, whereas said channel element (10, 100) consists of an aluminum channel obtained by extrusion and cut to measure.

10. A drawer element according to any one of the previous claims, wherein said support elements (30, 31) include frame-shaped aluminium supports, having fastening holes made along vertical sides thereof, and wherein said fastening elements (40) consist of self-tapping screws.

## Patentansprüche

1. Ein Schubladenelement, insbesondere für Regalstrukturen zum Anbringen des Fahrzeuginnenraumes, wobei diese Strukturen enthaltenen Elemente und/oder Schubladenelemente (1) umfassen, die an Stützelementen (30, 31) verbunden sind, **dadurch gekennzeichnet, dass** das Schubladenelement Folgendes beinhaltet:
eine Mehrzahl von Kanalelementen (10, 100), die jeweils auf einer Seite mit einem oder mehreren inneren Längsrillen (11a, 11b) und durch zumindest eine Längskante Rille (12, 112) überquert ist;
eine Vielzahl von Metallblech-Formpresselemente (20), wobei jedes mit zumindest einer gefalteten Längsstützkante (22) versehen ist und mit Bohrungen (21a, 21b) die in Querreihen und in Abständen entsprechend den Abständen zwischen den inneren Längsrillen (11a, 11b) der Kanalelemente (10, 100) angeordnet sind;
Befestigungsmittel (40), die um die Metallblech-Formpresselemente (20) an die Kanalelemente (10) zu befestigen versehen sind, wobei die Metallblech-Formpresselemente senkrecht zu den genannten Kanalelemente (10, 100) und in Anlage an entgegengesetzten Enden desselben angeordnet sind, und mit die gefalteten Längsstützkante (22) der Metallblech-Formpresselemente so angeordnet sind, dass sie mit den Längskanten Rillen (12, 112) entsprechen, wobei die Befestigungsmittel so ausgebildet sind, dass sie mit den Endabschnitten der genannten inneren Längsrillen (11a, 11b) der Kanalelemente (10, 100) in Eingriff kommen;
mindestens ein Bodenelement (50) des Schubladenelements, das in den Längskanten Rillen (12, 112) der Kanalelemente (10, 100) eingebaut wird und auf den gefalteten Längsstützkante (22) der Metallblech-Formpresselemente (20) ruht;
Verbindungsmittel (32, 33) zum gleitenden Anschluss des Schubladenelementes (1) an verwandten Stützelementen (30, 31); flach "C"-förmigen Elemente (24, 124), die durch elastische Verformung und in einer Reihe in einem oder mehreren der genannten inneren Längsrillen (11a, 11b) der Kanalelemente (10, 100) angewandt werden können, so dass Vertikale Nuten (25, 125) dazwischen zum Einführen eines oder mehrerer Trennelemente (29) darin definiert werden.

2. Schubladenelement nach Anspruch 1, wobei jedes Verbindungsmittel besteht aus:
Stütz- und Führungsmitteln (34, 35), die unter einer Längsstützklappe (26) von einem entsprechenden Metallblech-Formpresselement (20) angeordnet und an der Seite gegenüber der gefalteten Längsstützkante (22) gefaltet ist;
einer Platte (32, 33), mit der die Stütz- und Führungsmittel (34, 35) verbunden sind, wobei ein oder mehrere Löcher (36a, 36b, 37a, 37b, 37c) in die Platte (32, 33) gebohrt sind und so geordnet werden dass, sie in die Stützelemente (30, 31) gemacht Löcher (38a, 38b, 38c) entsprechen, zur Verbindung mit der Stützelementen (30, 31) durch Schraubenmittel.

3. Schubladenelement nach der vorherigen Ansprüchen, wobei das Bodenelement (50) in eine Vielzahl von Abschnitten (51, 52) aufgeteilt ist, die voneinander durch eines Trennelement (53) unterteilt sind, wobei das Trennelement gegenüberliegende Enden mit gleichen Dicke wie die Dicke des Bodenelementes (51, 52) und im Inneren der Längsrandrillen (12, 112) ausgestattet hat.

4. Schubladenelement nach Anspruch 3, wobei das Trennelement (53) an seiner Unterseite entweder Verfügungsmitteln (55) oder Löcher aufweist, zur Anbringung darin von Schrauben und Muttern, die zur Befestigung einer Trennwand (56) unterhalb des entsprechenden Trennelementes (53) angewendet werden.

5. Schubladenelement nach Anspruch 4, wobei jedes flache "C"-förmige Element (124) aufweist einen bogenförmigen Säumen (27) entlang jede Längskante, welcher dazu bestimmt ist, den Eingriff der gleichen Kanten innerhalb mindestens einer der inneren Längsrillen (11a, 11b) des Kanals (100) zu verursachen.

6. Schubladenelement nach Anspruch 4, wobei das flache "C"-förmige Element (24) aufweist einen bogenförmigen Säumen (27) entlang eines Längskante, der dazu bestimmt ist, den Eingriff der gleichen Kante innerhalb einer inneren Längsrillen (11a, 11b) zu verursachen, und eine Falte entlang der anderen Kante zum Definieren einer Grenze (38), die zum Einsetzen in eine durch einen Flügel (18) begrenzt Längsaufnahme (17), die auf der gleichen Oberfläche wie die oben genannten inneren Längsrillen (11a, 11b) des Kanalelementes (10) vorhanden ist, vorgesehen ist.

7. Schubladenelement nach der einem der vorhergehenden Ansprüchen, wobei ein Kanalelement (10) zur Ausbildung der Vorderwand des Schubladenelements (1), eine geformte Längskante (14) umfasst, die für oszillierende Unterstützung von einem Handgriff (43) zum Öffnen des Schubladenelementes vorgesehen ist, wobei die geformte Längskante (14) eine weitere, neben einem kreisförmigen verdickten Kante (16) sich befindliche innere Längsrille (11 c) aufweist, die zur Verbindung mit in die Pressformelemente (21) hergestellten weiteren Löchern (21c) mittels weiteren Befestigungsmitteln (40), wobei der Handgriff (43) einen von einer Kanalnut (44) zur Verbindung gelenkig mit der verdickten Kante (16) in Längsrichtung durchquert Körper aufweist, und wobei der Handgriff zumindest einen Saitenhalter (45) umfasst, der für Verriegelungsmitteln (60) des Schubladenelementes (1) im geschlossenen Zustand zu drücken vorgesehen ist, um das Schubladenelement zu entriegeln und die Öffnung desselben zu ermöglichen, wenn der Handgriff A gedreht wird.

8. Schubladenelement nach Anspruch 8, wobei das Verriegelungsmittel (60) des Schubladenelementes im geschlossenen Zustand zumindest eine Sperrklinke (61), die drehbar um eine horizontale Achse (62) gelagert ist und elastisch in einer horizontalen Position gehalten wird, aufweist, deren freies Ende eine Steigung (63) und eine Kerbe (64), die die Steigung in Richtung der horizontalen Achse (62) gefolgt, umfasst, und wobei zumindest ein Zapfen (65), der außerhalb zumindest eines der Formpresselementen (20) verbinden ist, dazu bestimmt ist, beim Schließen des Schubladenelementes (1) zu gleiten, bis er die Kerbe (64) eintritt.

9. Schubladenelement nach der einem der vorhergehenden Ansprüchen, wobei das Formpresselement (20) aus Aluminiumblech besteht und eine Vielzahl von nebeneinander liegenden Reihen von Löchern (21a, 21b, 21c) aufweist, die unterschiedliche Breite des Schubladenelementes (1) ermöglichen, wobei das Kanalelement (10, 100) aus einem durch Extrusion erhalten und auf Maß geschnitten Aluminiumkanal bestehet

10. Schubladenelement nach der einem der vorhergehenden Ansprüchen, wobei das Stützelement (30, 31) einen rahmenförmige Aluminiumträger umfasst, der Befestigungslöcher, die entlang die vertikalen Seiten der Träger hergestellt sind, aufweist, und wobei die Befestigungsmitteln (40) aus selbstschneidenden Schrauben bestehen.

## Revendications

1. Elément à tiroirs, en particulier pour structures d'aménagement de l'intérieur de véhicules, lesdites structures contenant des éléments et/ou des éléments à tiroir (1) reliés avec des éléments de soutien (30, 31), **caractérisé en ce qu'**il comprend: une pluralité d'éléments profilés (10, 100) chacun traversé d'un côté par une ou plusieurs rainures longitudinales intérieures (11a, 11b) et par au moins une rainure longitudinale prévue sur le bord (12, 112);
une pluralité d'éléments de presse moulé en tôle métallique (20), chacun pourvu d'au moins un bord longitudinal plié de support (22) et comportant des trous (21a, 21b) disposés en rangées transversales, et à des distances correspondant aux distances entre lesdites rainures longitudinales intérieures (11a, 11b) desdits éléments profilés (10, 100); des moyens de fixation (40) conçus pour fixer lesdits éléments de presse moulé en tôle métallique (20) sur lesdits éléments profilé (10), avec ceux-ci disposés perpendiculairement aux éléments profilé (10, 100) mentionnés ci-dessus, en butée contre les extrémités opposées des de ceux-ci, et avec les bord longitudinal plié de support (22) positionné de façon à correspondre avec lesdites rainure longitudinale prévue sur le bord (12, 112), lesdits moyens de fixation étant destinée à venir en prise avec les sections d'extrémité des rainures longitudinales intérieures précitées (11a, 11b) desdits éléments profilé (10, 100);
au moins un élément de fond de l'élément de tiroir (50), monté dans les rainures prévue sur le bord (12, 112) des éléments profilé (10, 100) et reposant sur les bord longitudinal plié de support (22) des éléments de presse moulé (20);
des moyens de connexion (32, 33) pour connecter de manière coulissante ledit élément de tiroir (1) à des éléments de support (30, 31) associés;
des éléments plats en forme de "C" 24, 124 applicable au moyen d'une déformation élastique et, dans une série, et dans une ou plusieurs desdites rainures longitudinales intérieures 11a, 11b desdits éléments profilé 10, 100 de manière à définir des rainures verticales 25, 125 entre eux entre eux pour l'insertion dans celui-ci de un ou plusieurs éléments de séparation 29.

2. Un élément de tiroir selon la revendication 1, dans lequel chaque moyens de connexion se compose de:
moyens de support et de guidage (34, 35), placés sous un rabat de support longitudinal (26) correspondant d'un élément de presse moulé en tôle métallique (20) correspondant, le rabat étant plié vers le côté opposé au bord longitudinal plié de support (22);
une plaque (32, 33), à laquelle lesdites moyens de support et de guidage (34, 35) sont reliées, avec un ou plusieurs trous (36a, 36b, 37a, 37b, 37c) qui sont percés dans ladite plaque (32, 33) et conçu pour correspondre à des trous correspondants (38a, 38b, 38c) réalisés dans lesdits éléments de support (30, 31) pour le raccordement auxdits éléments de support (30, 31) par des moyens à vis.

3. Un élément de tiroir selon les revendications précédentes, dans lequel l'élément de fond (50) est divisé en une pluralité de parties (51, 52), divisées l'un de l'autre par un élément de séparation (53) ayant des extrémités opposées de la même épaisseur dudit élément de fond (51, 52) et montées à l'intérieur desdites rainure longitudinale prévue sur le bord (12, 112).

4. Un élément de tiroir selon la revendication 3, dans lequel ledit élément de séparation (53) comporte sur sa face inférieure, soit des moyens de jonction (55) ou des trous pour l'application dans celle-ci des dispositifs vis-écrou, prévus pour le montage d'une paroi de séparation (56) pour appliquer au-dessous de l'élément de séparation associé (53).

5. Un élément de tiroir selon la revendication 4, dans lequel chaque élément plat en forme de "C" (124) comporte un ourlet en forme d'arc (27) le long de chaque bord longitudinal, conçu pour provoquer l'engagement des mêmes bords à l'intérieur d'au moins l'une des rainures longitudinales intérieures (11a, 11b) dudit éléments profilé (100).

6. Un élément de tiroir selon la revendication 4, dans lequel chaque élément plat en forme de "C" (24) comporte un ourlet en forme d'arc (27) le long d'un bord longitudinal, conçu pour provoquer l'engagement du même bord à l'intérieur d'une rainure longitudinale intérieure (11a, 11b), et un pli le long de l'autre bord pour définir un bord (38) conçu pour être inséré dans un siège longitudinal (17) délimité par une aile (18) présent sur la même surface que les rainures longitudinales intérieures (11a, 11b) mentionnées ci-dessus de l'éléments profilé (10).

7. Un élément de tiroir selon l'une quelconque des revendications précédentes, dans lequel un éléments profilé (10), qu'il forme la paroi avant dudit élément de tiroir (1), présente un bord longitudinal profilé (14) conçu pour le support pivotant d'une poignée (43) pour l'ouverture du même élément de tiroir, ladite bord profilé (14) comportant en outre rainures longitudinales intérieures (11c) situé à côté d'un bord circulaire épaissie (16), et conçu pour correspondre avec d'autres trous (21c) réalisés dans lesdits éléments de presse moulé (21) par d'autres moyens de fixation (40), tandis que ladite poignée (43) comprend un corps traversé longitudinalement par une rainure canalisée (44) conçu pour s'accoupler de manière articulée avec ledit bord épaissie (16), ladite poignée comportant au moins une pièce de raccordement (45) conçu pour pousser des moyens de verrouillage (60) de l'élément de tiroir (1) à l'état fermé, pour déverrouiller l'élément de tiroir et permettre l'ouverture de celle-ci lorsque ladite poignée est mise en rotation A.

8. Un élément de tiroir selon la revendication 8, dans lequel lesdites moyens de verrouillage (60) de l'élément de tiroir à l'état fermé comprennent au moins un cliquet (61) supporté en rotation autour d'un axe horizontal (62) et maintenu élastiquement en position horizontale, avec une extrémité libre comportant une pente (63) suivie, allant vers l'essieu horizontal (62), par une encoche (64), et avec au moins un tenon (65) monté à l'extérieur d'au moins l'un desdits éléments de presse-moulé (20) et conçu pour glisser, tandis que la fermeture de ladite élément de tiroir (1), jusqu'à ce qu'elle entre dans ladite encoche (64).

9. Un élément de tiroir selon l'une quelconque des revendications précédentes, dans lequel ledit élément de presse-moulé (20) est constitué d'une feuille d'aluminium et comporte une pluralité de séries de trous (21a, 21b, 21c) placées côte à côte pour atteindre différente largeur de l'élément de tiroir (1), tandis que ledit élément profilé (10, 100) est constitué d'un canal d'aluminium obtenu par extrusion et coupé à la mesure.

10. Un élément de tiroir selon l'une quelconque des revendications précédentes, dans lequel lesdits éléments de soutien (30, 31) comprennent des supports en aluminium en forme de cadre, comportent des trous de fixation réalisés le long des côtés verticaux de celui-ci, et dans lequel lesdits éléments de fixation (40) sont constitués de vis auto-taraudeuse.
